# EUROPÄISCHE PATENTANMELDUNG

(11) **EP 4 703 762 A1**
(43) Veröffentlichungstag der Anmeldung: **04.03.2026**
(21) Anmeldenummer: 25190271.4
(22) Anmeldetag: 17.07.2025
(51) Int. Cl.: G01S 7/40, G01F 23/284, G01S 7/41, G01S 13/86, G01S 13/88

(54) **VERFAHREN ZUR ZUSTANDSÜBERWACHUNG EINES DURCH LAUFZEITBESTIMMUNG ELEKTROMAGNETISCHER WELLEN ARBEITENDEN ABSTANDSSENSORS**

(30) Priorität: 29.08.2024 DE 102024124753
(71) Anmelder: Krohne Messtechnik GmbH, 47058 Duisburg (DE)
(72) Erfinder: Gembaczka, Pierre, 47058 Duisburg (DE); Mück, Penelope, 47058 Duisburg (DE); Dübler, Fabian, 44789 Bochum (DE); Schulz, Christian, 44892 Bochum (DE); Schmits, Christoph, 44149 Dortmund (DE)
(74) Vertreter: Gesthuysen Patentanwälte

(57) **Zusammenfassung**

Beschrieben und dargestellt sind ein Verfahren (1) zur Zustandsüberwachung eines durch Laufzeitbestimmung elektromagnetischer Wellen arbeitenden Abstandssensors (2), wobei bei einem Messvorgang von einer Steuer- und Auswerteeinheit (3) des Abstandssensors (2) ein Sendesignal (S_tx) erzeugt wird und das Sendesignal (S_tx) teilweise als Abstrahlsignal (S_emit) in einen Erfassungsraum (5) des Abstandssensors (2) emittiert wird, wobei das Sendesignal (S_tx) durch Wechselwirkung mit Komponenten des Abstandssensors (2) teilweise als parasitäres Klingelsignal (S_ring) zu der Steuer- und Auswerteeinheit (3) zurückkehrt und erfasst wird.

Ein verbessertes Verfahren (1) zur Zustandsüberwachung des Abstandssensors (2) wird dadurch erzielt dass in dem Abstandssensor (2) ein Referenz-Frequenzspektrum (FS_ref) eines bei einer Referenztemperatur (T_ref) in einem Gutzustand des Abstandssensors (2) erzeugten und erfassten Klingelsignals (S_ring) abgelegt ist, dass im Betrieb in einem Istzustand des Abstandssensors (2) die Betriebstemperatur (T_op) des Abstandssensors (2) erfasst (6) wird und ein Betrieb-Frequenzspektrum (FS_op) eines bei der Betriebstemperatur (T_op) erzeugten und erfassten Klingelsignals (S_ring) ermittelt (7) wird, dass aus der Betriebstemperatur (T_op) und aus dem bei der Betriebstemperatur (T_op) ermittelten Betrieb-Frequenzspektrum (FS_op) ein erwartetes Referenz-Frequenzspektrum (FS_ref,exp) ermittelt (8) wird, dass das in dem Abstandssensor (2) abgelegte Referenz-Frequenzspektrum (FS_ref) mit dem erwarteten Referenz-Frequenzspektrum (FS_ref,exp) in einem Vergleichsschritt (9) verglichen wird, dass eine Referenz-Frequenzspektrumabweichung (delta_FS) ermittelt (10) wird und aus der Referenz-Frequenzspektrumabweichung (delta_FS) eine Zustandsabweichung (delta_x) des Abstandssensors (2) ermittelt (11) wird und die Zustandsabweichung (delta_x) zumindest mittelbar signalisiert (12) wird.

## Beschreibung

Die Erfindung betrifft ein Verfahren zur Zustandsüberwachung eines durch Laufzeitbestimmung elektromagnetischer Wellen arbeitenden Abstandssensors, wobei bei einem Messvorgang von einer Steuer- und Auswerteeinheit des Abstandssensors ein Sendesignal erzeugt wird und das Sendesignal teilweise als Abstrahlsignal in einen Erfassungsraum des Abstandssensors emittiert wird, wobei das Sendesignal durch Wechselwirkung mit Komponenten des Abstandssensors teilweise als parasitäres Klingelsignal zu der Steuer- und Auswerteeinheit zurückkehrt und erfasst wird. Darüber hinaus betrifft die Erfindung auch einen solchen Abstandssensor.

Abstandssensoren der vorgenannten Art sind seit langem bekannt, sie finden beispielsweise Anwendung bei der Füllstandmessung in der Prozesstechnik oder auch bei der Objekterkennung im automotiven Bereich, um nur zwei Beispiele zu nennen. Die Arbeitsweise beruht darauf, dass der Abstandssensor - unmittelbar oder mittelbar - die Laufzeit des von ihm als elektromagnetische Welle erzeugten Sendesignals, das in den Erfassungsraum des Abstandssensors abgestrahlt wird und von einem Objekt im Erfassungsraum zumindest teilweise reflektiert wird und zu dem Abstandssensor als reflektiertes Sendesignal zurückkehrt, ermittelt. Auf Grundlage der bekannten Ausbreitungsgeschwindigkeit der elektromagnetischen Welle wird dann der Abstand des Objektes im Erfassungsraum zum Abstandssensor berechnet.

In der industriellen Praxis werden oft Sendesignale im GHz-Bereich erzeugt, auf die Wahl der Arbeitsfrequenzen kommt es bei den hier gemachten Betrachtungen jedoch nicht an. Viele Abstandssensoren arbeiten mit Freiraumwellen, die also in den Erfassungsraum des Abstandssensors emittiert werden und sich dort ungeführt ausbreiten. Es gibt aber auch Abstandssensoren, bei denen elektromagnetische Wellen geführt - beispielsweise mittels eines Hohlleiters oder einer Koaxialleitung - in den Erfassungsraum ausgestrahlt werden; auch darauf kommt es bei den hier vorgestellten Überlegungen nicht an.

Die Signallaufzeit wird von manchen Abstandssensoren unmittelbar erfasst, insbesondere bei solchen, die Pulse als Sendesignal aussenden (Pulsradar). In diesem Fall wird der Empfang des reflektierten Sendesignals zeitlich hoch aufgelöst erfasst, sodass eine unmittelbare Laufzeitinformation vorliegt. Andere Abstandssensoren arbeiten mit einem kontinuierlichen Sendesignal, dessen Frequenz - beispielsweise linear ansteigend - moduliert wird (FMCW-Radar, frequency modulated continuous wave). Das Sendesignal und das reflektierte Sendesignal - also das Empfangssignal - werden dann gemischt, wobei das Mischsignal Frequenzanteile der Differenzfrequenz und der Summenfrequenz von Sende- und Empfangssignal aufweist. Durch Bestimmung der Differenzfrequenz kann demnach mittelbar auf die Laufzeit geschlossen werden, da die Änderungsrate der Frequenzmodulation bekannt ist. Diese Vorgehensweise hat erhebliche Vorteile bei der Signalverarbeitung.

Allen beschriebenen Abstandssensoren ist gemeinsam, dass das von der Steuer- und Auswerteeinheit erzeugte Sendesignal durch Wechselwirkung mit Komponenten des Abstandssensors teilweise als parasitäres Klingelsignal zu der Steuer- und Auswerteeinheit zurückkehrt und dort erfasst wird. Es handelt sich um ein parasitäres Signal, weil es mit der eigentlich interessierenden Messgröße, nämlich dem von dem Objekt reflektierten und zurücckehrenden Sendesignal, das den Erfassungsraum des Abstandssensors durchlaufen hat, im Wesentlichen nichts zu tun hat. Das Klingelsignal entsteht hauptsächlich durch Eigenreflexion am und Eigenleitung durch den Abstandssensor selbst und ist als solches kaum vermeidbar. Eine solche Eigenreflexion entsteht beispielsweise an Übergängen eines sich ändernden Wellenwiderstandes, also auch dann, wenn das Sendesignal einen Antennenkörper in den Freiraum verlässt.

Da das Klingelsignal hauptsächlich innerhalb des Abstandssensors verläuft, trifft es typischerweise als erstes Empfangssignal nach Aussenden des Sendesignals wieder bei der Steuer- und Auswerteeinheit ein. Da das Klingelsignal von den konstruktiven Eigenarten des Abstandssensors abhängig ist, ändert sich der Zeitraum zwischen Sende- und Empfangszeit praktisch nicht, weshalb sich ein solches Klingelsignal zur Ermittlung der eigentlich interessierenden Messgröße relativ einfach ausblenden lässt, beispielsweise durch zeitliche Fensterung des Empfangs oder der Auswertung von Empfangssignalen.

Aus der DE 10 2012 014 267 A1 ist bekannt, ein Klingelsignal bewusst auszuwerten, um die Abdichtung eines Hohlraums innerhalb des Abstandssensors zu überwachen. Dazu wird ein Vergleichswert herangezogen, der im intakten Zustand des Abstandssensors, also in seinem Gutzustand, aufgenommen worden ist, und dieser Vergleichswert wird mit einem im normalen Betrieb des Abstandssensors aktuell aufgenommenen Wert, der im Bezug zum Klingelsignal steht, verglichen, wodurch Änderungen im Zustand des Abstandssensors festgestellt werden können.

Aufgabe der vorliegenden Erfindung ist es, ein verbessertes Verfahren zu entwickeln, um den Zustand eines Abstandssensors überwachen zu können.

Diese Aufgabe wird bei dem erfindungsgemäßen Verfahren mit einem ersten Merkmal dadurch gelöst, dass in dem Abstandssensor ein Referenz-Frequenzspektrum eines bei einer Referenztemperatur in einem Gutzustand des Abstandssensors erzeugten und erfassten Klingelsignals abgelegt ist. Dem Verfahren liegt die Erkenntnis zugrunde, dass das Frequenzspektrum eines Klingelsignals eines individuellen Abstandssensors charakteristisch für diesen individuellen Abstandssensor ist und dass das Klingelsignal - und damit das Frequenzspektrum des Klingelsignals - temperaturabhängig ist. Zwar ist das Klingelsignal eines Abstandssensors eines bestimmten Bautyps im Wesentlichen ähnlich von individuellem Abstandssensor zu individuellem Abstandssensor, gleichwohl gibt es bestimmte Charakteristiken und individuelle Abweichungen, die in nicht vermeidbaren Unterschieden in der Realisierung des Abstandssensors begründet sind, also beispielsweise in der Streuung des Übertragungs- und Temperaturverhaltens von elektronischen Bauteilen, aber auch in der Streuung der Parameter von konstruktiven Teilen des Abstandssensors.

Jedenfalls ist als bedeutend erkannt worden, dass zur Beurteilung des Frequenzspektrums des Klingelsignals auch die Kenntnis der Temperatur des Abstandssensors wichtig ist, bei der das Sendesignal und damit das Klingelsignal erzeugt worden ist. Die Ermittlung und das Ablegen des sensorindividuellen Referenz-Frequenzspektrums bei Referenztemperatur im Gutzustand des Abstandssensors erfolgt üblicherweise bei der werksseitigen Kalibrierung des Abstandssensors, wenn die Möglichkeit besteht, den Abstandssensor bei definierten Bedingungen zu betreiben. Gleichzeitig ist direkt nach Herstellung des Abstandssensors davon auszugehen, dass sich der Abstandssensor in einem einwandfreien Zustand, also in einem Gutzustand, befindet.

Bei dem Klingelsignal kann es sich um das unveränderte durch Eigenreflexion/Eigenleitung entstandene Klingelsignal handeln, es kann sich aber auch um das Klingelsignal handeln, das bereits eine Zwischenverarbeitung durchlaufen hat, also beispielsweise das Mischen mit dem Sendesignal bei einem FMCW-Radar. Wichtig ist lediglich, dass die charakteristischen Informationen über das interne Übertragungsverhalten des Abstandssensors im zwischenverarbeiteten Klingelsignal enthalten sind. Es wird nachfolgend der Einfachheit halber nur von "dem Klingelsignal" gesprochen.

Bei dem Verfahren wird ferner im Betrieb des Abstandssensors - also wenn der Abstandssensor an seinem Einsatzort montiert oder auch fest verbaut ist - die Betriebstemperatur des Abstandssensors erfasst und es wird ein Betrieb-Frequenzspektrum eines bei der Betriebstemperatur erzeugten und erfassten Klingelsignals ermittelt. Wenn die Betriebstemperatur von der Referenztemperatur abweicht, wird in der Regel auch das Betrieb-Frequenzspektrum von dem Referenz-Frequenzspektrum abweichen, die beiden Frequenzspektren weisen aufgrund der Temperaturabhängigkeit des Klingelsignals unterschiedliche Eigenschaften auf.

Dann wird erfindungsgemäß aus der Betriebstemperatur und aus dem bei der Betriebstemperatur ermittelten Betrieb-Frequenzspektrum ein erwartetes Referenz-Frequenzspektrum ermittelt, also das Frequenzspektrum, das bei Referenztemperatur vorliegen müsste, wenn sich der Abstandssensor noch im Gutzustand befindet. Das erwartete Referenz-Frequenzspektrum für den Abstandssensor im Gutzustand wird also abgeleitet aus der Information der Betriebstemperatur und dem im Betrieb ermittelten Betrieb-Frequenzspektrum bei der Betriebstemperatur.

Abstandssensoren weisen als Steuer- und Auswerteeinheit üblicherweise eine Hardware auf Basis eines oder mehrerer Mikrocontroller und/oder auf Basis eines oder mehrerer digitaler Signalprozessoren auf. Auch werden Lösungen implementiert unter Verwendung von fest programmierbaren Logikgattern wie Field Programmable Gate Arrays (FPGAs). Den Implementierungen ist gemein, dass sie Abtastsysteme realisieren, bei denen analoge Signalverläufe in einem meist festen Zeitraster abgetastet, wertemäßig quantisiert und dann weiterverarbeitet werden. Um eine Frequenzanalyse durchzuführen, werden die abgetasteten Messwerte üblicherweise einer digitalen Fourier-Transformation unterzogen, meist einer Fast-Fourier-Transformation (FFT), die dann die in Rede stehenden Frequenzspektren mit Amplituden- und Phaseninformation des Signals liefert.

Schließlich wird das in dem Abstandssensor abgelegte Referenz-Frequenzspektrum mit dem erwarteten Referenz-Frequenzspektrum in einem Vergleichsschritt verglichen und es wird eine Referenz-Frequenzspektrumabweichung ermittelt. Wenn der Abstandssensor keiner Veränderung unterliegt, also im Wesentlichen seinen Gutzustand aufweist, wird die Referenz-Frequenzspektrumabweichung nicht vorhanden oder jedenfalls sehr niedrig sein. Hat sich hingegen an dem Zustand des Abstandssensors etwas verändert, liegt also eine Abweichung vom Gutzustand des Abstandssensors vor, wird eine Referenz-Frequenzspektrumabweichung feststellbar sein, jedenfalls wenn sich die Zustandsänderung auf das Klingelsignal auswirkt. Aus diesem Grund kann schließlich aus der Referenz-Frequenzspektrumabweichung eine Zustandsabweichung des Abstandssensors ermittelt werden. Die Zustandsabweichung wird dann zumindest mittelbar signalisiert. Die Signalisierung der Zustandsabweichung kann intern im Abstandssensor durch Abspeichern eines Zustandsparameters erfolgen, die Zustandsabweichung kann aber auch auf einer Anzeige des Abstandssensors angezeigt werden oder als Busnachricht über einen Feldbus, an den der Abstandssensor angeschlossen ist, zu anderen Busteilnehmern übertragen werden.

Es hat sich gezeigt, dass beispielsweise Anhaftungen an Abstrahlelementen (zum Beispiel Horn- oder Tropfantennen) des Abstandssensors eine gut detektierbare Zustandsabweichung sind, mit anderen Worten also Verschmutzungen des Abstandssensors, da diese sich oft direkt auf das Klingelsignal auswirken.

Es gibt verschiedene Möglichkeiten, aus dem bei Betriebstemperatur ermittelten Betrieb-Frequenzspektrum auf das erwartete Referenz-Frequenzspektrum zu schließen, dies ist Gegenstand von nachfolgend beschriebenen Ausgestaltungen der Erfindung.

Bei einer bevorzugten Ausgestaltung des Verfahrens werden für eine Mehrzahl von verschiedenen Abstandssensoren, insbesondere Abstandssensoren gleicher Bauart, jeweils im Gutzustand der Abstandssensoren mehrere Frequenzspektren des Klingelsignals bei verschiedenen Temperaturen ermittelt. Unter diesen mehreren Frequenzspektren des Klingelsignals befindet sich auch das Frequenzspektrum des Klingelsignals, das bei Referenztemperatur vorliegt. Die mehreren temperaturabhängigen Frequenzspektren werden dann als Frequenzspektrum-Kurvenschar gespeichert. Durch diese Maßnahme wird eine Datenbasis geschaffen, anhand derer jedenfalls dem Grunde nach ersichtlich ist, welches Referenz-Frequenzspektrum bei einem Abstandssensor typischerweise vorliegt, wenn dessen Betrieb-Frequenzspektrum bei der zugeordneten Betriebstemperatur einen bestimmten Verlauf hat. Diese Datenbasis wird typischerweise beim Hersteller des Abstandssensors mit einer Mehrzahl von Abstandssensoren unter Variation der Betriebstemperatur erfasst. Dieser Verfahrensschritt betrifft nicht den normalen Betrieb des Abstandssensors bzw. wird nicht im normalen Betrieb des Abstandssensors durchgeführt.

Ein mögliches Verfahren zur Ermittlung des erwarteten Referenz-Frequenzspektrums arbeitet unmittelbar mit der zuvor dargestellten Datenbasis mit der Mehrzahl von Frequenzspektrum-Kurvenscharen. Es zeichnet sich dadurch aus, dass in den mehreren Frequenzspektrum-Kurvenscharen dasjenige Frequenzspektrum der Betriebstemperatur ermittelt wird, das die höchste Übereinstimmung mit dem bei der Betriebstemperatur des Abstandssensors erfassten Betrieb-Frequenzspektrums hat. Als erwartetes Referenz-Frequenzspektrum wird dann dasjenige Frequenzspektrum der Referenztemperatur aus derjenigen Frequenzspektrum-Kurvenschar bestimmt, welche Frequenzspektrum-Kurvenschar das Frequenzspektrum mit der höchsten Übereinstimmung aufweist. Bei diesem Verfahren müssen also Vergleiche von Frequenzspektren angestellt werden, und zwar jeweils ein Vergleich pro Frequenzspektrum-Kurvenschar, da der Vergleich des Betrieb-Frequenzspektrums des tatsächlich im Betrieb befindlichen Abstandssensors immer nur mit dem Frequenzspektrum innerhalb einer Frequenzspektrum-Kurvenschar erfolgt, das auch der Betriebstemperatur, also der Betriebstemperatur des tatsächlich im Betrieb befindlichen Abstandssensors, entspricht. Diese Methode ist aufwendig, da ständig mit der gesamten Datenbasis gearbeitet werden muss (Speicheraufwand) und eine Vielzahl von Vergleichsberechnungen durchgeführt werden müssen (Rechenaufwand). Dieser Verfahrensvariante wird bevorzugt außerhalb des Abstandssensors durchgeführt, beispielsweise auf einem externen Leitrechner.

Bei einer Weiterbildung des Verfahrens wird die höchste Übereinstimmung zwischen zwei Frequenzspektren ermittelt durch Anwendung einer statistischen Ähnlichkeitsanalyse, insbesondere durch Berechnung eines Ähnlichkeitsmaßes und/oder eines Distanzmaßes und/oder durch Berechnung einer Korrelation.

Ein alternatives und bevorzugtes Verfahren zur Ermittlung des erwarteten Referenz-Frequenzspektrums arbeitet unter Einsatz der Methoden des maschinellen Lernens, konkret mit einem trainierten künstlichen neuronalen Netzwerk. Das künstliche neuronale Netzwerk ermittelt das erwartete Referenz-Frequenzspektrum, wobei das künstliche neuronale Netzwerk als Eingangsgrößen die Betriebstemperatur des Abstandssensors und das bei der Betriebstemperatur des Abstandssensors erfasste Betrieb-Frequenzspektrum erhält. Als Ausgangsgröße liefert das künstliche neuronale Netzwerk zumindest das erwartete Referenz-Frequenzspektrum bei der Referenztemperatur. Konkret umfasst der Eingangsvektor des künstlichen neuronalen Netzwerks beispielsweise eine Anzahl von n Amplitudenwerten des Frequenzspektrums bei n Frequenzen, wobei die Frequenzen nicht angegeben werden müssen, wenn sie einheitlich verwendet werden und bekannt sind. Die Referenztemperatur ist üblicherweise eine vereinbarte und festgelegte Größe, sodass sie in diesem Fall kein Eingangsdatum sein muss. Dann liefert der Ausgangsvektor des künstlichen neuronalen Netzwerks korrespondierend eine Anzahl von n Amplitudenwerten des erwarteten Referenz-Frequenzspektrums bei n Frequenzen, wobei auch hier die Frequenzen nicht angegeben werden müssen, wenn sie einheitlich verwendet werden und bekannt sind. Es hat sich gezeigt, dass die Regressionsaufgabe der Bestimmung eines erwarteten Referenz-Frequenzspektrums mit einem relativ kleinen neuronalen Netzwerk gelöst werden kann, das auch auf einem Abstandssensor implementierbar ist, das als typisches Feldgerät realisiert ist, wie zum Beispiel bei einem prozesstechnischen Füllstandsensor.

Bei einer Weiterbildung des Verfahrens wird das im Gutzustand aufgenommene Referenz-Frequenzspektrum ebenfalls von dem trainierten künstlichen neuronalen Netzwerk verarbeitet. Das durch diese Verarbeitung durch das künstliche neuronale Netzwerk erhaltene abgeleitete Referenz-Frequenzspektrum wird dann als das abgelegte Referenz-Frequenzspektrum verwendet. Das bedeutet, dass insbesondere der Vergleichsschritt durchgeführt wird mit dem abgeleiteten Referenz-Frequenzspektrum, das das künstliche neuronale Netzwerk durchlaufen hat.

Das Training des künstlichen neuronalen Netzes erfolgt üblicherweise an zentraler Stelle für einen Abstandsensortyp beim Hersteller des Abstandssensors, nur das Trainingsergebnis, also das trainierte neuronale Netzwerk, gelangt auf den Abstandssensor. Das neuronale Netzwerk zur Bestimmung des erwarteten Referenz-Frequenzspektrums kann aber auch an anderer Stelle berechnet werden, es muss nicht zwingend auf dem Abstandssensor berechnet werden. Bei einer Weiterbildung des Verfahrens wird das künstliche neuronale Netzwerk trainiert mit den Frequenzspektren der Frequenzspektrum-Kurvenscharen mehrerer Abstandssensoren, wobei als Trainings-Eingangsdaten jeweils ein Frequenzspektrum und die dem Frequenzspektrum zugeordnete Temperatur verwendet werden, und wobei als Trainings-Ausgangsdatum zumindest das Referenz-Frequenzspektrum der Frequenzspektrum-Kurvenschar verwendet wird, aus der das Frequenzspektrum als Trainings-Eingangsdatum stammt. Es wird hier nur von Temperaturen und Frequenzspektren gesprochen, weil die für das Training verwendeten Frequenzspektren in Strenge nicht im regulären Betrieb erhalten werden, sondern unter definierten und kontrollierten Bedingungen, beispielsweise im Werk des Herstellers der Abstandssensoren.

Eine bevorzugte Ausgestaltung des Verfahrens sieht vor, dass die Frequenzspektren der Frequenzspektrum-Kurvenscharen und die den Frequenzspektren der Frequenzspektrum-Kurvenscharen zugeordneten Temperaturen vor ihrer Verwendung als Trainingsdaten normalisiert werden, insbesondere durch Abbildung des Wertebereiches der Frequenzspektren und des Wertebereichs der den Frequenzspektren zugeordneten Temperaturen von Minimalwert zu Maximalwert auf einen definierten Normwertebereich. Es hat sich als vorteilhaft herausgestellt, wenn jedes Frequenzspektrum einer Frequenzspektrum-Kurvenschar separat normalisiert wird, also beispielsweise auf einen Amplitudenbereich von 0 bis 1 abgebildet wird. Bei dieser Normalisierung gehen zwar die Amplitudeninformationen von Frequenzspektren untereinander verloren, es hat sich aber herausgestellt, dass die normalisierten Frequenzspektren hinreichend charakteristisch sind, um sich für das Training des künstlichen neuronalen Netzwerks zu eignen.

Eine Weiterbildung des Verfahrens ist dadurch gekennzeichnet, dass in dem Vergleichsschritt die Referenz-Frequenzspektrumabweichung ermittelt wird durch Anwendung einer statistischen Ähnlichkeitsanalyse, insbesondere durch Berechnung eines Ähnlichkeitsmaßes und/oder eines Distanzmaßes oder durch Ermittlung einer Korrelation.

Wie bereits angedeutet worden ist, kann das Verfahren bzw. können die Verfahrensvarianten an verschiedenen Orten durch verschiedene Akteure mit einer gewissen Rechenleistung durchgeführt werden. Bei verschiedenen bevorzugten Ausgestaltungen des Verfahrens wird die Ermittlung des Betrieb-Frequenzspektrums des bei der Betriebstemperatur erzeugten und erfassten Klingelsignals und/oder die Ermittlung des erwarteten Referenz-Frequenzspektrums und/oder der Vergleichsschritt und/oder die Ermittlung der Referenz-Frequenzspektrumabweichung und/oder die Ermittlung der Zustandsabweichung von der Steuer- und Auswerteeinheit des Abstandssensors durchgeführt oder sie erfolgt auf einem externen Rechner außerhalb des Abstandssensors (zum Beispiel Leitrechner im Feldbussystem oder Diagnoseserver via Ethernet oder Mobilfunk).

Bei einer weiteren bevorzugten Ausgestaltung des Verfahrens wird als Zustandsabweichung des Abstandssensors ein Verschmutzungsgrad des Abstandssensors ermittelt.

Die Erfindung betrifft ebenfalls einen Abstandssensor, der auf Grundlage der Laufzeitbestimmung elektromagnetischer Wellen arbeitet, wobei bei einem Messvorgang von einer Steuer- und Auswerteeinheit des Abstandssensors ein Sendesignal erzeugt wird und das Sendesignal teilweise als Abstrahlsignal in einen Erfassungsraum des Abstandssensors emittiert wird und wobei das Sendesignal durch Wechselwirkung mit Komponenten des Abstandssensors teilweise als parasitäres Klingelsignal zu der Steuer- und Auswerteeinheit zurückkehrt und erfasst wird.

Die aufgezeigte Aufgabe wird bei dem Abstandssensor mit den beschriebenen Verfahrensmerkmalen gelöst, also dadurch, dass in dem Abstandssensor ein Referenz-Frequenzspektrum eines bei einer Referenztemperatur in einem Gutzustand des Abstandssensors erzeugten und erfassten Klingelsignals abgelegt ist, dass im Betrieb in einem Istzustand des Abstandssensors die Betriebstemperatur des Abstandssensors erfasst wird und ein Betrieb-Frequenzspektrum eines bei der Betriebstemperatur erzeugten und erfassten Klingelsignals ermittelt wird, dass aus der Betriebstemperatur und aus dem bei der Betriebstemperatur ermittelten Betrieb-Frequenzspektrum ein erwartetes Referenz-Frequenzspektrum ermittelt wird, und dass das in dem Abstandssensor abgelegte Referenz-Frequenzspektrum mit dem erwarteten Referenz-Frequenzspektrum in einem Vergleichsschritt verglichen und eine Referenz-Frequenzspektrumabweichung ermittelt wird und aus der Referenz-Frequenzspektrumabweichung eine Zustandsabweichung des Abstandssensors ermittelt wird und die Zustandsabweichung zumindest mittelbar signalisiert wird.

Vorzugsweise weist die Steuer- und Auswerteeinheit ein trainiertes künstliches neuronales Netzwerk auf, mit dem das erwartete Referenz-Frequenzspektrum ermittelt wird, wobei das künstliche neuronale Netzwerk als Eingangsgrößen die Betriebstemperatur des Abstandssensors und das bei der Betriebstemperatur des Abstandssensors erfasste Betrieb-Frequenzspektrum erhält, und wobei das künstliche neuronale Netzwerk als Ausgangsgröße zumindest das erwartete Referenz-Frequenzspektrum bei der Referenztemperatur liefert.

In einem bevorzugten Ausführungsbeispiel ist die Steuer- und Auswerteeinheit so ausgestaltet, dass das im Gutzustand aufgenommene Referenz-Frequenzspektrum ebenfalls von dem trainierten künstlichen neuronalen Netzwerk verarbeitet wird und dass das derart abgeleitete Referenz-Frequenzspektrum als das abgelegte Referenz-Frequenzspektrum verwendet wird, insbesondere also im Vergleichsschritt.

Bei einer weiteren bevorzugten Ausgestaltung ermittelt die Steuer- und Auswerteeinheit in dem Vergleichsschritt die Referenz-Frequenzspektrumabweichung durch Anwendung einer statistischen Ähnlichkeitsanalyse, insbesondere durch Berechnung eines Ähnlichkeitsmaßes und/oder eines Distanzmaßes, oder durch Ermittlung einer Korrelation.

Bei einer bevorzugten Ausgestaltung ermittelt der Abstandssensor mittels der Steuer- und Auswerteeinheit als Zustandsabweichung des Abstandssensors einen Verschmutzungsgrad des Abstandssensors.

Im Einzelnen gibt es nun eine Vielzahl von Möglichkeiten, das erfindungsgemäße Verfahren und den erfindungsgemäßen Abstandssensor auszugestalten und weiterzubilden. Dazu wird verwiesen einerseits auf die den unabhängigen Patentansprüchen nachgeordneten Patentansprüche, andererseits auf die folgende Beschreibung von Ausführungsbeispielen in Verbindung mit der Zeichnung. In der Zeichnung zeigen
- Fig. 1: schematisch einen aus dem Stand der Technik bekannten Abstandssensor und ein Verfahren zum Betrieb des Abstandssensors,
- Fig. 2: schematisch ein Frequenzspektrum eines FMCW-Radar-Abstandssensors mit Klingelsignal und Reflexionssignal,
- Fig. 3: schematisch ein Verfahren zur Zustandsüberwachung des Abstandssensors,
- Fig. 4: schematisch Referenz-Frequenzspektren des Klingelsignals von verschiedenen Abstandssensoren (4a) und die Temperaturabhängigkeit des Betrieb-Frequenzspektrums des Klingelsignals eines individuellen Abstandssensors (4b),
- Fig. 5: schematisch ein Verfahren zur Ermittlung eines erwarteten Referenz-Frequenzspektrums ohne den Einsatz von künstlichen neuronalen Netzwerken,
- Fig. 6: schematisch ein Verfahren zur Ermittlung eines erwarteten Referenz-Frequenzspektrums unter Einsatz eines künstlichen neuronalen Netzwerks,
- Fig. 7: schematisch den Einsatz des künstlichen neuronalen Netzwerks, auch zur Ableitung eines Referenz-Frequenzspektrums,
- Fig. 8: normalisierte Trainingsdaten zum Trainieren des künstlichen neuronalen Netzwerks und
- Fig. 9: die Wirkung des trainierten künstlichen neuronalen Netzwerks auf Frequenzspektren unterschiedlicher Abstandssensoren bei unterschiedlichen Temperaturen (Temperaturkompensation).

In den Figuren sind in verschiedenen Aspekten Verfahren 1 zur Zustandsüberwachung eines durch Laufzeitbestimmung elektromagnetischer Wellen arbeitenden Abstandssensors 2 und auch derartige Abstandssensoren 2 dargestellt.

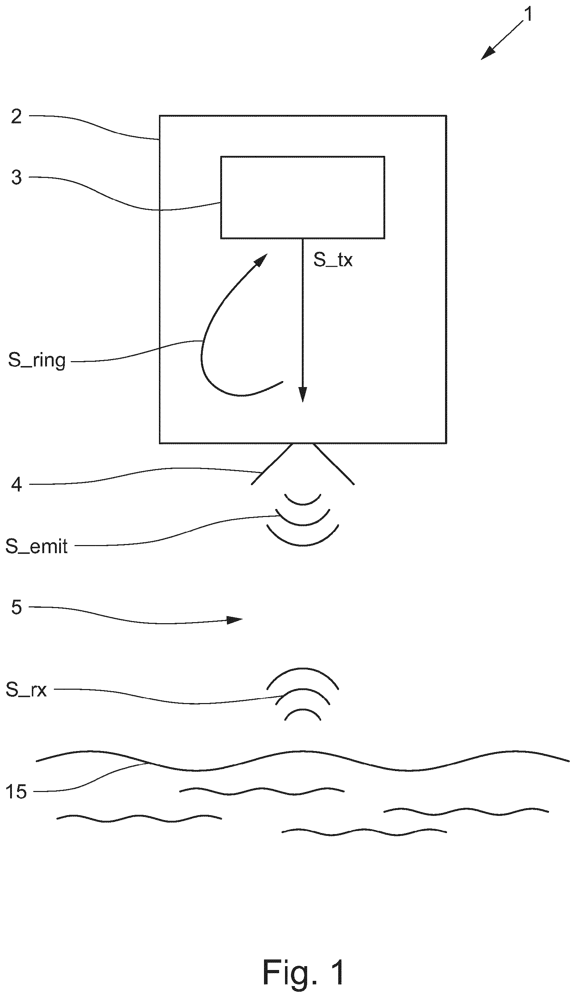

Fig. 1 zeigt die grundsätzliche Arbeitsweise eines Abstandssensors 2 und eines Verfahrens 1 zur Durchführung der Abstandsmessung mit dem Abstandssensor 2, wie sie aus dem Stand der Technik bekannt sind. Dabei geht es in Fig. 1 weniger um eine Zustandsüberwachung des Abstandssensors 2, sondern vielmehr um das grundsätzliche Messprinzip zur Abstandserfassung, dessen Verständnis jedoch für die weiteren Erläuterungen zur Zustandsüberwachung hilfreich ist.

Bei einem Abstandsmessvorgang mit dem Abstandssensor 2 wird von einer Steuer- und Auswerteeinheit 3 des Abstandssensors 2 ein Sendesignal S_tx erzeugt und das Sendesignal S_tx wird teilweise mittels einer Antenne 4 als Abstrahlsignal S_emit in einen Erfassungsraum 5 des Abstandssensors 2 emittiert. In Fig. 1 handelt es sich bei dem Abstandssensor 2 um einen Füllstandsensor. Bei dem Erfassungsraum 5 handelt es sich um das Volumen eines Tanks. Das Abstrahlsignal wird an einer Medium-Grenzschicht 15 jedenfalls teilweise reflektiert und das reflektierte Sendesignal kehrt als Reflexionssignal S_rx zu dem Abstandssensor 2 zurück. Bei dem Reflexionssignal handelt es sich um das eigentlich interessierende Messsignal bei der Abstandsmessung.

Das Sendesignal S_tx kehrt allerdings durch Wechselwirkung mit Komponenten des Abstandssensors 2 teilweise auch als parasitäres Klingelsignal S_ring zu der Steuer- und Auswerteeinheit 3 zurück und wird dort auch wieder erfasst. Um die Nutzung des Klingelsignals S_ring geht es im Wesentlichen bei dem hier vorgestellten Verfahren 1 zur Zustandsüberwachung des Abstandssensors 2.

Das zur Steuer- und Auswerteeinheit 3 zurückkehrende Signal setzt sich demnach zusammen aus dem für die Abstandsmessung wichtigen Reflexionssignal S_rx und dem parasitären Klingelsignal S_ring.

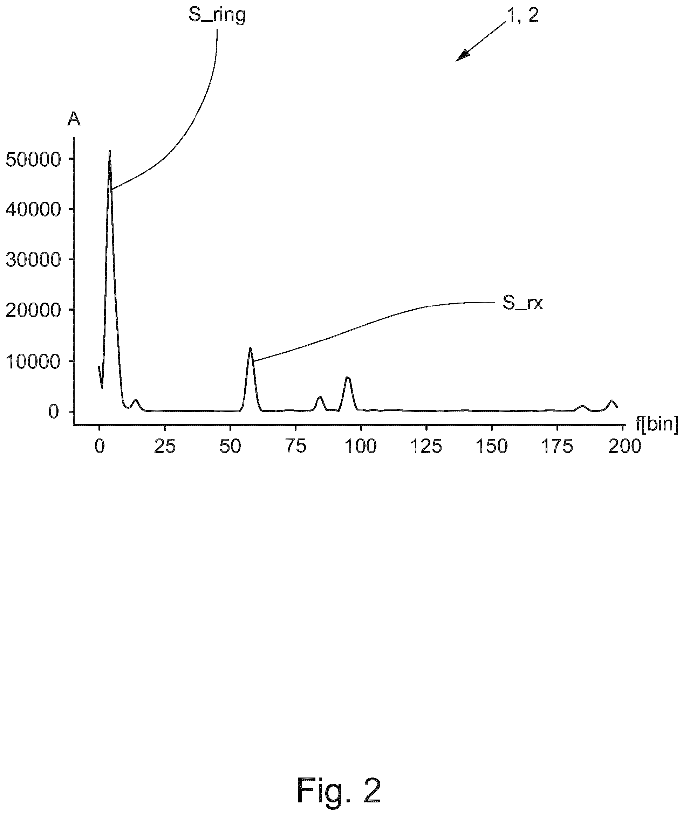

In Fig. 2 ist ein typisches Frequenzspektrum des gesamten Empfangssignals des Abstandssensors 2 dargestellt mit dem Anteil des für die Abstandsmessung erforderlichen Reflexionssignals S_rx von einem Objekt im Erfassungsraum 5 des Abstandssensors 2 und mit dem Anteil des Klingelsignals S_ring, das im Wesentlichen von den konstruktiven Gegebenheiten des Abstandssensors 2 selbst herrührt.

Bei dem Abstandssensor 2 handelt es sich vorliegend um einen FMCW-Radar-Abstandssensor. Die Frequenz in Fig. 2 ist über die Abszisse aufgetragen in "bins" einer digitalen Fast-Fourier-Transformation, also in Frequenzbereichen, deren Breite durch die Abtastrate des frequenzanalysierten Zeitsignals und durch die Anzahl der in die diskrete Fast-Fourier Transformation eingehenden Abtastwerte bestimmt wird. Die Amplitudenanteile innerhalb eines bins werden aufsummiert und bilden den Gesamtamplitudenwert in diesem Frequenzbereich. Dargestellt ist die Frequenzanalyse des Mischsignals aus Sendesignal S_tx und Empfangssignal, wobei das Empfangssignal sowohl das Reflexionssignal S_rx als auch das Klingelsignal S_ring umfasst. Da das Mischsignal Signalanteile enthält bei der Differenzfrequenz von Sende- und Empfangssignal und die Frequenz des Sendesignals im vorliegenden Fall linear mit der Zeit erhöht wird (sägezahnförmiger Zeitverlauf der Frequenz), entspricht die Frequenz gleichzeitig einer Abstandsinformation. Folgerichtig liegt das Klingelsignal S_ring bei niedrigen Frequenzen vor, da es unmittelbar durch Wechselwirkung mit dem Abstandssensor 2 erzeugt wird und ohne große zeitliche Verzögerung zu der Steuer- und Auswerteeinheit 3 und damit zu einem hier nicht dargestellten Empfangsmischer zurückkehrt. In der kurzen Laufzeit hat sich die Frequenz des Sendesignals nur geringfügig geändert, die Differenzfrequenz des gemischten Klingelsignals ist also klein. Das Reflexionssignal S_rx hingegen hat eine größere Laufzeit, innerhalb derer sich die Frequenz des Sendesignals S_tx jedenfalls deutlicher geändert hat, sodass die Differenzfrequenz des Mischsignals (Sendesignal*Reflexionssignal) größer ist. Das Reflexionssignal bei der höheren Frequenz zeigt demnach einen größeren Abstand an.

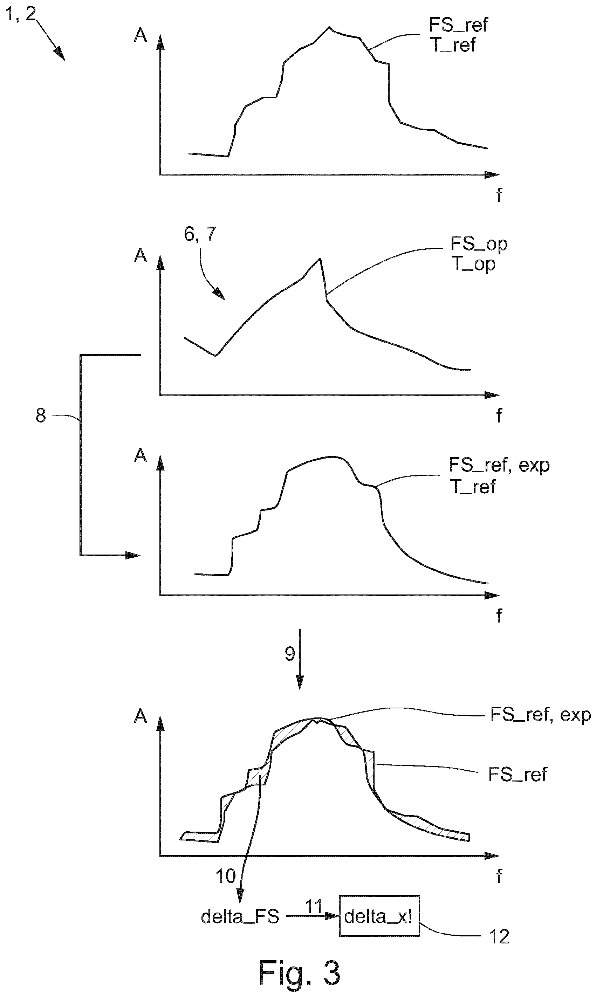

Dem in Fig. 3 dargestellten Verfahren 1 liegt die Überlegung zugrunde, durch geschicktes Auswerten des Klingelsignals S_ring auf den Zustand bzw. eine Zustandsänderung des Abstandssensors 2 zu schließen, da das Klingelsignal S_ring hauptsächlich durch Wechselwirken mit dem Abstandssensor 2 selbst zustande kommt und sich Veränderungen des Abstandssensors 2 (elektronische Bauteile, konstruktive Zusammenhänge, Verschmutzungen) in der Charakteristik des Klingelsignals niederschlagen.

Das Verfahren 1 sieht vor, dass in dem Abstandssensor 2 ein Referenz-Frequenzspektrum FS_ref eines bei einer Referenztemperatur T_ref in einem Gutzustand des Abstandssensors 2 erzeugten und erfassten Klingelsignals S_ring abgelegt ist (zuoberst dargestelltes Frequenzspektrum in Fig. 3). Hier ist das Referenz-Frequenzspektrum FS_ref bei der werksseitigen Kalibrierung aufgenommen worden, der Abstandssensor 2 befindet sich unmittelbar nach der Herstellung und Kalibrierung mit hoher Wahrscheinlichkeit in einem Gutzustand.

Im Betrieb des Abstandssensors 2, also im Einbauzustand wie bei der in Fig. 1 gezeigten Anwendung als Füllstandsensor, wird in einem Istzustand des Abstandssensors 2 die Betriebstemperatur T_op des Abstandssensors 2 erfasst 6 und ein Betrieb-Frequenzspektrum FS_op eines bei der Betriebstemperatur T_op erzeugten und erfassten Klingelsignals S_ring wird ermittelt 7 (zweites Frequenzspektrum von oben in Fig. 3).

Ein wichtiger Schritt des Verfahrens 1 sieht vor, dass aus der Betriebstemperatur T_op und aus dem bei der Betriebstemperatur T_op ermittelten Betrieb-Frequenzspektrum FS_op ein erwartetes Referenz-Frequenzspektrum FS_ref,exp ermittelt wird 8 (drittes Frequenzspektrum von oben in Fig. 3).

Schließlich wird in einem Vergleichschritt 9 das in dem Abstandssensor 2 abgelegte Referenz-Frequenzspektrum FS_ref mit dem erwarteten Referenz-Frequenzspektrum FS_ref,exp verglichen.

Aus dem Vergleich der beiden genannten Frequenzspektren wird eine Referenz-Frequenzspektrumabweichung delta_FS ermittelt 10. Im dargestellten Fall wird die Fläche (Betrag) zwischen den beiden Frequenzspektren berechnet (unterste Darstellung von zwei Frequenzspektren in Fig. 3). Aus der Referenz-Frequenzspektrumabweichung delta_FS wird eine Zustandsabweichung delta_x des Abstandssensors 2 ermittelt 11, die im gezeigten Ausführungsbeispiel einem Verschmutzungsgrad entspricht. Der Zusammenhang zwischen der Referenz-Frequenzspektrumabweichung delta_FS und dem Verschmutzungsgrad als Zustandsabweichung delta_x ist in werksseitigen Versuchen ermittelt worden. Beim vorliegenden Beispiel von Verschmutzungen sind Anhaftungen an der Antenne 4 des Abstandssensors 2 schrittweise erhöht worden. Die Zustandsabweichung delta_x wird als Busnachricht über einen Feldbus des Abstandssensors 2 nach außen signalisiert 12 (delta_x!).

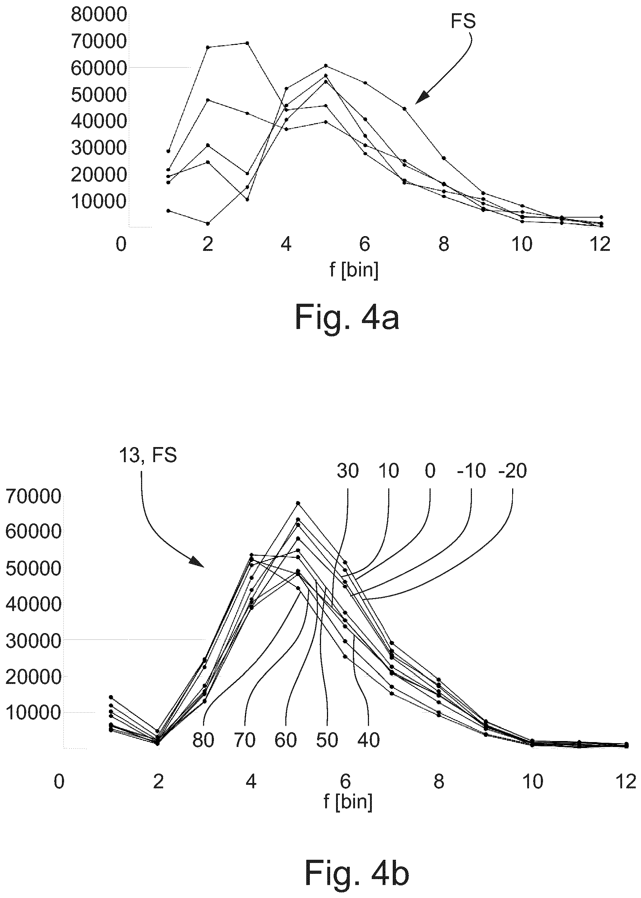

Bei Untersuchungen, die dem entwickelten Verfahren 1 zugrunde liegen, ist erkannt worden, dass das Frequenzspektrum FS des Klingelsignals S_ring bei ein und derselben Betriebstemperatur zwischen verschiedenen Abstandssensoren 2.1-2.5 variiert (Fig. 4a), genau so wie sich die Betrieb-Frequenzspektren F_op eines Klingelsignals S_ring bei ein und demselben Abstandssensor 2 in Abhängigkeit von der Betriebstemperatur T_op ändern (Fig. 4b). Die Betriebstemperatur in Fig. 4b ist im Bereich von -20°C bis +80°C bei der Messwertaufnahme variiert worden. Diese individuellen Variationen von Abstandssensor 2 zu Abstandssensor 2 und die Temperaturabhängigkeiten geben Veranlassung dazu, eine Datenbasis gezielt zu erheben. Dazu werden für eine Mehrzahl von verschiedenen Abstandssensoren 2, insbesondere Abstandssensoren 2 gleicher Bauart, jeweils im Gutzustand der Abstandssensoren 2 mehrere Frequenzspektren FS des Klingelsignals S_ring bei verschiedenen Temperaturen T ermittelt und die mehreren temperaturabhängigen Frequenzspektren FS werden jeweils als Frequenzspektrum-Kurvenschar 13 mit den temperaturabhängigen Frequenzspektren FS des jeweiligen Abstandssensors 2 gespeichert. Es werden also eine Mehrzahl von Frequenzspektrum-Kurvenscharen 13, wie in Fig. 4b dargestellt, von verschiedenen Abstandssensoren 2 erhoben und gespeichert. Diese Frequenzspektrum-Kurvenscharen 13 charakterisieren das Verhalten eines Abstandssensors 2 einer bestimmten Bauart im Gutzustand.

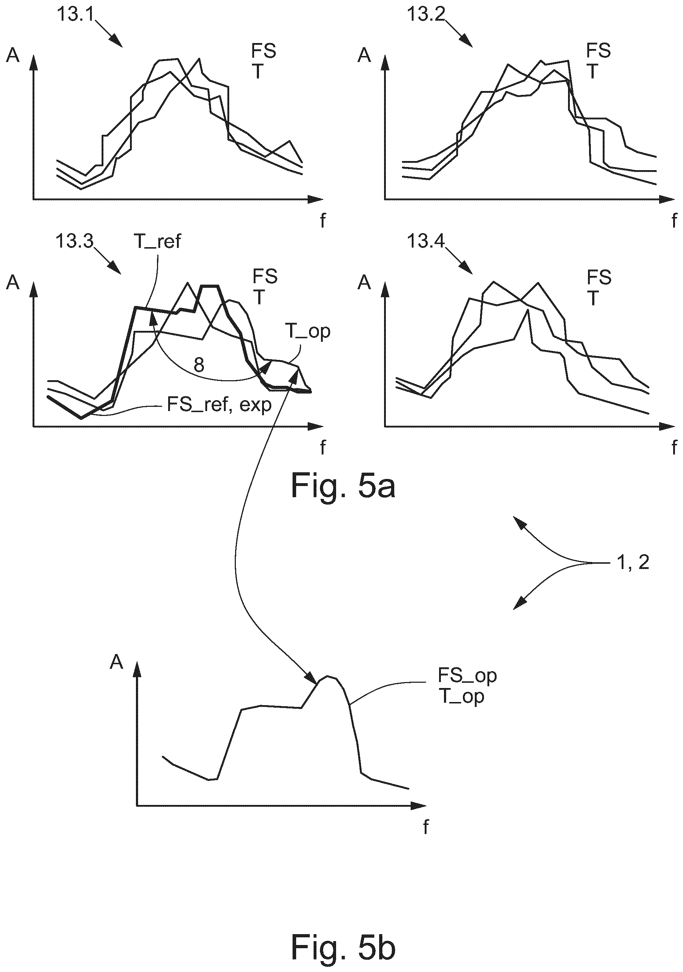

Eine Variante zur Auffindung des erwarteten Referenz-Frequenzspektrums FS_ref,exp ist in Fig. 5 dargestellt. Fig. 5a zeigt mehrere erfasste Frequenzspektrum-Kurvenscharen 13.1 bis 13.4 von mehreren Abstandssensoren 2. Dies sind Kurvenscharen 13, die werksseitig von mehreren Abstandssensoren 2 erfasst worden sind.

Es wird bei dem im Betrieb befindlichen Abstandssensor 2 ein Betrieb-Frequenzspektrum FS_op bei der Betriebstemperatur T_op erfasst, wie in Fig. 5b dargestellt. Aus der Mehrzahl erfasster Frequenzspektrum-Kurvenscharen 13.1 bis 13.4 gemäß Fig. 5a wird dann dasjenige Frequenzspektrum FS der Betriebstemperatur T_op ermittelt, das die höchste Übereinstimmung mit dem bei der Betriebstemperatur T_op des Abstandssensors 2 erfassten Betrieb-Frequenzspektrums FS_op gemäß Fig. 5b hat. Dies ist in dem Ausführungsbeispiel zu finden in der Frequenzspektrum-Kurvenschar 13.3.

Als erwartetes Referenz-Frequenzspektrum FS _ref,exp wird dann dasjenige Frequenzspektrum der Referenztemperatur T_ref aus derjenigen Frequenzspektrum-Kurvenschar 13.3 bestimmt, welche Frequenzspektrum-Kurvenschar 13.3 das Frequenzspektrum FS_op mit der höchsten Übereinstimmung aufweist. Das ist das in der Frequenzspektrum-Kurvenschar 13.3 stark gezeichnete Frequenzspektrum FS_ref,exp.

Das Verfahren 1 gemäß Fig. 5 arbeitet auf der gesamten Datenbasis mit der Mehrzahl an temperaturabhängigen Frequenzspektren FS als Frequenzspektrum-Kurvenschar 13.1-13.4 mit den temperaturabhängigen Frequenzspektren FS der verschiedenen Abstandssensoren 2 und ist entsprechend aufwendig. Aus diesem Grund wird der Verfahrensschritt 8 des Auffindens des erwarteten Referenz-Frequenzspektrums FS_ref,exp in diesem Fall auf einem externen Diagnose-Rechner durchgeführt, dem das auf dem Abstandssensor 2 bei der Betriebstemperatur T_op erfasste Betrieb-Frequenzspektrum FS_op und die zugehörige Betriebstemperatur T_op gemäß Fig. 5b von dem Abstandssensor 2 über eine Feldbusverbindung übertragen wird.

Die höchste Übereinstimmung zwischen zwei Frequenzspektren wird durch Anwendung einer statistischen Ähnlichkeitsanalyse, insbesondere durch Berechnung eines Ähnlichkeitsmaßes und/oder eines Distanzmaßes und/oder durch Berechnung einer Korrelation ermittelt. Auch hier wird wieder die Differenzfläche zwischen dem im Betrieb des Abstandssensors 2 bei der Betriebstemperatur T_op erfassten Betrieb-Frequenzspektrums FS_op gemäß Fig. 5b und den jeweiligen Vergleichs-Betrieb-Frequenzspektren gemäß Fig. 5a bei entsprechenden Betriebstemperaturen T_op als Vergleichsmaß herangezogen.

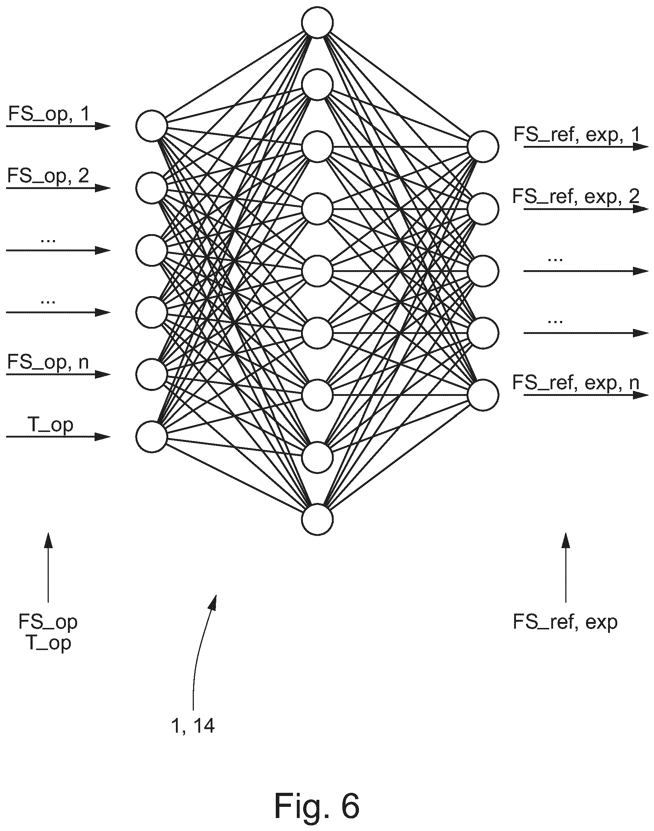

Wie anhand von Fig. 6 schematisch ersichtlich ist, arbeitet ein alternatives Verfahren 1 mit einem trainierten künstlichen neuronalen Netzwerk 14, mit dem das erwartete Referenz-Frequenzspektrum FS_ref,exp ermittelt wird, wobei das künstliche neuronale Netzwerk 14 als Eingangsgrößen die Betriebstemperatur T_op des Abstandssensors 2 und das bei der Betriebstemperatur T_op des Abstandssensors 2 erfasste Betrieb-Frequenzspektrum FS_op erhält, hier in Form der bin-Werte FS_op,1 bis FS_op,n. Das künstliche neuronale Netzwerk 14 liefert als Ausgangsgrößen das erwartete Referenz-Frequenzspektrum FS_ref,exp, in Fig. 6 bezeichnet als die Amplitudenwerte FS_refexp,1 bis FS_refexp,n jeweils bei der Referenztemperatur T_ref. Die Referenztemperatur T_ref ist bekannt und wird deshalb nicht separat ausgegeben.

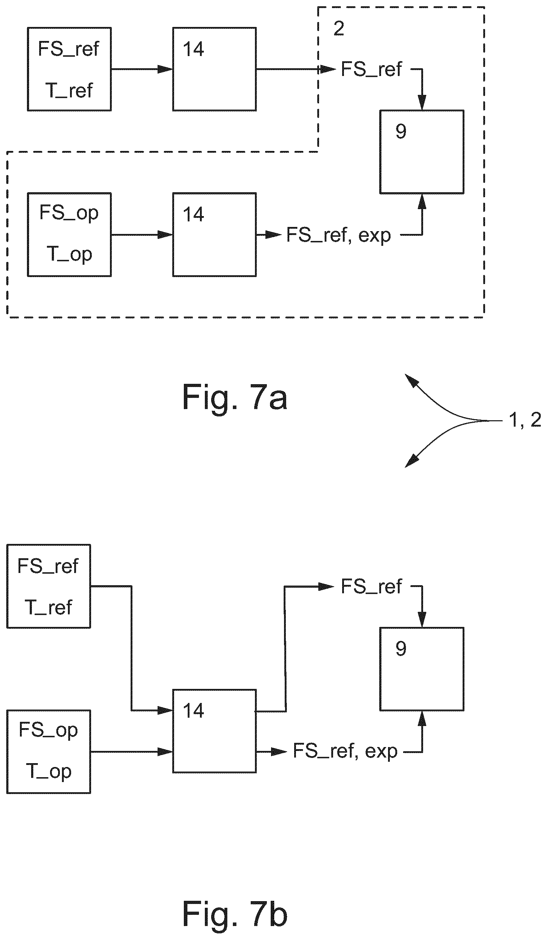

Fig. 7 zeigt, dass das im Gutzustand aufgenommene Referenz-Frequenzspektrum FS_ref ebenfalls von dem trainierten künstlichen neuronalen Netzwerk 14 verarbeitet wird und das derart abgeleitete Referenz-Frequenzspektrum als das abgelegte Referenz-Frequenzspektrum FS_ ref verwendet wird, also auch Gegenstand des Vergleichsschritts 9 ist. Bei dem Ausführungsbeispiel gemäß Fig. 7a wird das aufgenommene Referenz-Frequenzspektrum FS_ref außerhalb von dem Abstandssensor 2 durch das künstliche neuronale Netzwerk 14 geschickt und so das abgeleitete Referenz-Frequenzspektrum FS_ref erhalten, das dann in dem Abstandssensor 2 abgespeichert wird. Zur Durchführung des Vergleichsschritts 9 werden nur die Betrieb-Frequenzspektren FS_op mit dem künstlichen neuronalen Netzwerk 14 verarbeitet und so das erwartete Referenz-Frequenzspektrum FS_ref,exp erhalten, mit dem der Vergleichsschritt 9 dann durchgeführt wird.

Fig. 7b zeigt eine alternative Variante des Verfahrens 1. Hier wird auf dem Abstandssensor 2 das originär ermittelte Referenz-Frequenzspektrum FS_ref, so wie es direkt von der diskreten Frequenzanalyse durch eine Fast-Fourier-Transformation erhalten worden ist, auf dem Abstandssensor 2 abgespeichert. Immer wenn das Verfahren 1 zur Zustandsüberwachung des Abstandssensors 2 durchgeführt wird, wird auch das abgelegte Referenz-Frequenzspektrum FS_ref durch das künstliche neuronale Netzwerk 14 bearbeitet, sodass das abgeleitete Referenz-Frequenzspektrum FS_ref erhalten wird, das dann Grundlage für den Vergleichsschritt 9 ist. Diese Vorgehensweise stellt zwar einen höheren Rechenaufwand auf dem Abstandssensor 2 dar, jedoch besteht der Vorteil darin, dass das künstliche neuronale Netzwerk 14 im Betrieb des Abstandssensors 2 durch ein verbessertes künstliches neuronales Netzwerk 14 ersetzt werden kann (beispielsweise im Rahmen eines Firmware-Updates), was im Falle des Ausführungsbeispiels gemäß Fig. 7a nicht ohne Weiteres möglich ist.

Die künstlichen neuronalen Netzwerke 14 werden mit den Frequenzspektren FS der Frequenzspektrum-Kurvenscharen 13 mehrerer Abstandssensoren 2 trainiert, wobei als Trainings-Eingangsdaten jeweils ein Frequenzspektrum FS und die dem Frequenzspektrum FS zugeordnete Temperatur T verwendet werden, und wobei als Trainings-Ausgangsdatum zumindest das Referenz-Frequenzspektrum FS_ref der Frequenzspektrum-Kurvenschar 13 verwendet wird, aus der das Frequenzspektrum FS als Trainings-Eingangsdatum stammt.

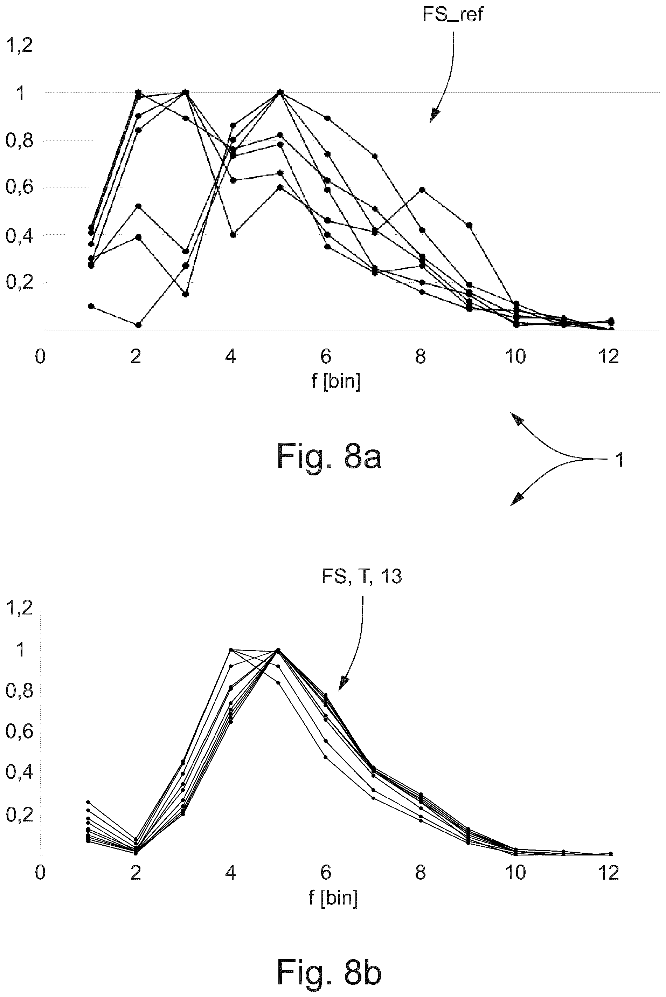

Bei dem in Fig. 8 dargestellten Verfahren 1, werden die Frequenzspektren FS der Frequenzspektrum-Kurvenscharen 13 und die den Frequenzspektren FS der Frequenzspektrum-Kurvenscharen 13 zugeordneten Temperaturen T vor ihrer Verwendung als Trainingsdaten normalisiert. Dies geschieht durch Abbildung des Wertebereiches der Frequenzspektren FS und des Wertebereichs der den Frequenzspektren FS zugeordneten Temperaturen T von Minimalwert zu Maximalwert auf einen definierten Normwertebereich. Fig. 8a zeigt Referenz-Frequenzspektren FS_ref sieben verschiedener Abstandssensoren 2 im Gutzustand, wobei jedes der Referenz-Frequenzspektren FS_ref auf den Wertebereich 0 bis 1 normalisiert worden ist. Fig. 8b zeigt normalisierte Frequenzspektren FS eines einzigen Abstandssensors 2 bei verschiedenen Temperaturen T. Bei dieser Vorgehensweise gehen relative Amplitudeninformationen der Frequenzspektren FS untereinander verloren, jedoch hat die normalisiert Datenbasis einen großen Vorteil beim Training des künstlichen neuronalen Netzwerks 14.

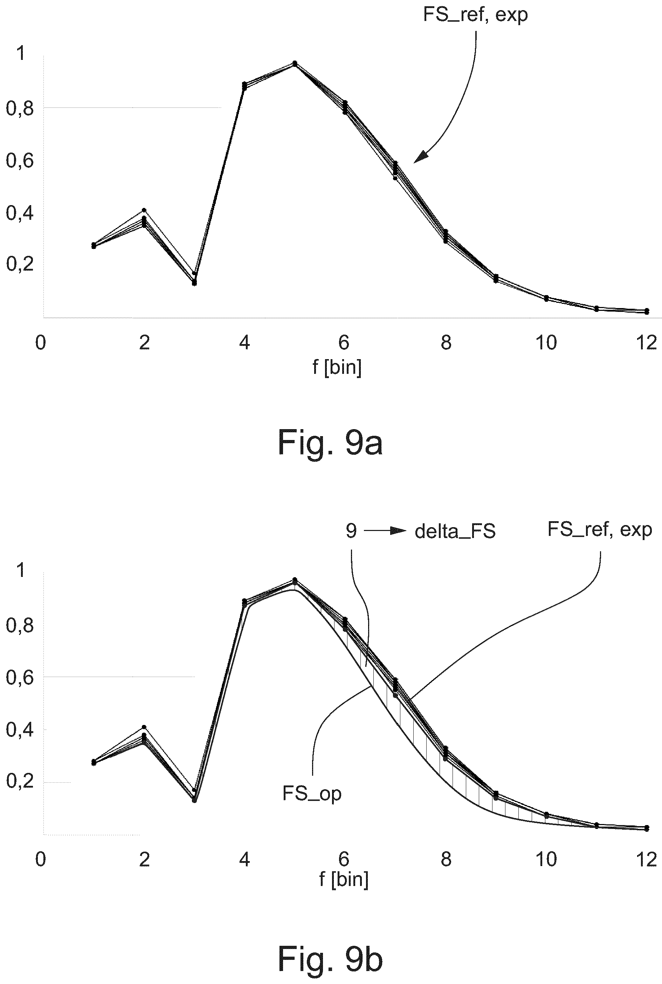

Durch das Training des künstlichen neuronalen Netzwerks 14 mit normalisierten Frequenzspektren FS einer Mehrzahl von Abstandssensoren 2 im Gutzustand setzt das künstliche neuronale Netzwerk 14 eine Abbildung von Frequenzspektren bei beliebigen Temperaturen auf ein generalisiertes Referenz-Frequenzspektrum um. Was damit gemeint ist, zeigt Fig. 9. Gezeigt sind in Fig. 9a eine Mehrzahl von erwarteten Referenz-Frequenzspektren FS _ref,exp, die das wie zuvor beschrieben trainierte künstlichen neuronale Netzwerk 14 berechnet, wenn von verschiedenen Abstandssensoren 2 im Gutzustand verschiedene Betrieb-Frequenzspektren FS_op bei verschiedenen Betriebstemperaturen T_op als Eingangssignal verwendet werden. Die Eingangs-Frequenzspektren FS_op werden von dem künstlichen neuronalen Netzwerk 14 mit großer Übereinstimmung auf generalisierte und normalisierte erwartete Referenz-Frequenzspektrum FS _ref,exp abgebildet, wobei die Variation zwischen den erwarteten Referenz-Frequenzspektren sehr gering ist; die erwarteten Referenz-Frequenzspektren FS_ref,exp liegen praktisch deckungsgleich übereinander. Aufgrund des dargestellten Abbildungsverhaltens des künstlichen neuronalen Netzwerks 14, das beliebige Frequenzspektren, die bei verschiedenen Temperaturen im Gutzustand von verschiedenen Abstandssensoren 2 erhalten worden sind, in guter Näherung auf ein einziges normalisiertes und generalisiertes erwartetes Referenz-Frequenzspektrum abbildet, ist es auch berechtigt zu sagen, dass mit dem künstlichen neuronalen Netzwerk 14 eine Temperaturkompensation von Frequenzspektren erreicht wird.

In Fig. 9b sind noch einmal die erwarteten Referenz-Frequenzspektren FS _ref,exp dargestellt. Zusätzlich ist noch ein Betrieb-Frequenzspektrum FS_op dargestellt, das ebenfalls das künstliche neuronale Netzwerk 14 durchlaufen hat. Das Betrieb-Frequenzspektrum FS_op stammt jedoch von einem Abstandssensor 2, der sich aufgrund von Verschmutzungen seiner Antenne 4 nicht mehr im Gutzustand befindet. Es ist eine deutliche Abweichung zwischen dem durch das künstliche neuronale Netzwerk 14 abgebildeten Betrieb-Frequenzspektrum und den erwarteten Referenz-Frequenzspektren zu erkennen. Im tatsächlichen Betrieb des Abstandssensors 2 würde nur eines der in Fig. 9b gezeigten erwarteten Referenz-Frequenzspektren FS _ref,exp berechnet werden. In dem Vergleichsschritt 9 wird als Referenz-Frequenzspektrumabweichung delta_FS die Fläche zwischen dem erwarteten Referenz-Frequenzspektrum FS_ref,exp und dem Betrieb-Frequenzspektrum FS_op, das ebenfalls das künstliche neuronale Netzwerk 14 durchlaufen hat, berechnet.

### Bezugszeichen

- 1: Verfahren
- 2: Abstandssensor
- 3: Steuer- und Auswerteeinheit
- 4: Antenne
- 5: Erfassungsraum
- 6: Erfassen der Betriebstemperatur
- 7: Ermitteln des Betrieb-Frequenzspektrums
- 8: Ermitteln des erwarteten Referenz-Frequenzspektrums
- 9: vergleichen des Referenz-Frequenzspektrums mit dem erwarteten Referenz-Frequenzspektrum
- 10: Ermitteln der Referenz-Frequenzspektrumabweichung
- 11: Ermitteln der Zustandsabweichung des Abstandssensors
- 12: Signalisieren der Zustandsabweichung
- 13: Frequenzspektrum-Kurvenschar
- 14: trainiertes künstliches Neuronales Netzwerk
- 15: Medium-Grenzschicht

- S_tx: Sendesignal
- S_rx: Reflexionssignal
- S_emit: Abstrahlsignal
- S_ring: Klingelsignal
- T_ref: Referenztemperatur
- FS_ref: Referenz-Frequenzspektrum
- T_op: Betriebstemperatur
- FS_op: Betrieb-Frequenzspektrum
- FS _ref,exp: erwartetes Referenz-Frequenzspektrum
- delta_FS: Referenz-Frequenzspektrumabweichung
- delta_x: Zustandsabweichung

## Patentansprüche

1. Verfahren (1) zur Zustandsüberwachung eines durch Laufzeitbestimmung elektromagnetischer Wellen arbeitenden Abstandssensors (2), wobei bei einem Messvorgang von einer Steuer- und Auswerteeinheit (3) des Abstandssensors (2) ein Sendesignal (S_tx) erzeugt wird und das Sendesignal (S_tx) teilweise als Abstrahlsignal (S_emit) in einen Erfassungsraum (5) des Abstandssensors (2) emittiert wird, wobei das Sendesignal (S_tx) durch Wechselwirkung mit Komponenten des Abstandssensors (2) teilweise als parasitäres Klingelsignal (S_ring) zu der Steuer- und Auswerteeinheit (3) zurückkehrt und erfasst wird,
**dadurch gekennzeichnet,**
**dass** in dem Abstandssensor (2) ein Referenz-Frequenzspektrum (FS_ref) eines bei einer Referenztemperatur (T_ref) in einem Gutzustand des Abstandssensors (2) erzeugten und erfassten Klingelsignals (S_ring) abgelegt ist, dass im Betrieb in einem Istzustand des Abstandssensors (2) die Betriebstemperatur (T_op) des Abstandssensors (2) erfasst (6) wird und ein Betrieb-Frequenzspektrum (FS_op) eines bei der Betriebstemperatur (T_op) erzeugten und erfassten Klingelsignals (S_ring) ermittelt (7) wird,
**dass** aus der Betriebstemperatur (T_op) und aus dem bei der Betriebstemperatur (T_op) ermittelten Betrieb-Frequenzspektrum (FS_op) ein erwartetes Referenz-Frequenzspektrum (FS_ref,exp) ermittelt (8) wird,
**dass** das in dem Abstandssensor (2) abgelegte Referenz-Frequenzspektrum (FS_ref) mit dem erwarteten Referenz-Frequenzspektrum (FS_ref,exp) in einem Vergleichsschritt (9) verglichen wird, dass eine Referenz-Frequenzspektrumabweichung (delta_FS) ermittelt (10) wird und aus der Referenz-Frequenzspektrumabweichung (deltaFS) eine Zustandsabweichung (delta_x) des Abstandssensors (2) ermittelt (11) wird und die Zustandsabweichung (delta_x) zumindest mittelbar signalisiert (12) wird.

2. Verfahren (1) nach Anspruch 1, **dadurch gekennzeichnet, dass** für eine Mehrzahl von verschiedenen Abstandssensoren (2), insbesondere Abstandssensoren (2) gleicher Bauart, jeweils im Gutzustand der Abstandssensoren (2) mehrere Frequenzspektren (FS) des Klingelsignals (S_ring) bei verschiedenen Temperaturen (T) ermittelt werden und die mehreren temperaturabhängigen Frequenzspektren (FS) als Frequenzspektrum-Kurvenschar (13) mit den temperaturabhängigen Frequenzspektren (FS) des jeweiligen Abstandssensors (2) gespeichert werden.

3. Verfahren (1) nach Anspruch 2, **dadurch gekennzeichnet, dass** in den mehreren Frequenzspektrum-Kurvenscharen (13) dasjenige Frequenzspektrum (FS) der Betriebstemperatur (T_op) ermittelt wird, das die höchste Übereinstimmung mit dem bei der Betriebstemperatur (T_op) des Abstandssensors (2) erfassten Betrieb-Frequenzspektrums (FS_op) hat, wobei als erwartetes Referenz-Frequenzspektrum (FS_ref,exp) dann dasjenige Frequenzspektrum der Referenztemperatur (T_ref) aus derjenigen Frequenzspektrum-Kurvenschar bestimmt wird (8), welche Frequenzspektrum-Kurvenschar (13) das Frequenzspektrum (FS_op) mit der höchsten Übereinstimmung aufweist.

4. Verfahren (1) nach Anspruch 3, **dadurch gekennzeichnet, dass** die höchste Übereinstimmung zwischen zwei Frequenzspektren (Frequenzspektrum, FS_op) ermittelt wird durch Anwendung einer statistischen Ähnlichkeitsanalyse, insbesondere durch Berechnung eines Ähnlichkeitsmaßes und/oder eines Distanzmaßes und/oder durch Berechnung einer Korrelation.

5. Verfahren (1) nach Anspruch 1 oder 2, **dadurch gekennzeichnet, dass** mit einem trainierten künstlichen neuronalen Netzwerk (14) das erwartete Referenz-Frequenzspektrum (FS_ref,exp) ermittelt wird, wobei das künstliche neuronale Netzwerk (14) als Eingangsgrößen die Betriebstemperatur (T_op) des Abstandssensors und das bei der Betriebstemperatur (T_op) des Abstandssensors (2) erfasste Betrieb-Frequenzspektrum (FS_op) erhält, und wobei das künstliche neuronale Netzwerk (14) als Ausgangsgröße zumindest das erwartete Referenz-Frequenzspektrum (FS_ref,exp) bei der Referenztemperatur (T_ref) liefert.

6. Verfahren (1) nach Anspruch 5, **dadurch gekennzeichnet, dass** das im Gutzustand aufgenommene Referenz-Frequenzspektrum (FS_ref) ebenfalls von dem trainierten künstlichen neuronalen Netzwerk (13) verarbeitet wird und das derart abgeleitete Referenz-Frequenzspektrum (FS_ref) als das abgelegte Referenz-Frequenzspektrum (FS_ref) verwendet wird.

7. Verfahren (1) nach einem der Ansprüche 5 oder 6 insoweit rückbezogen auf Anspruch 2, **dadurch gekennzeichnet, dass** das künstliche neuronale Netzwerk (14) trainiert wird mit den Frequenzspektren (FS) der Frequenzspektrum-Kurvenscharen (13) mehrerer Abstandssensoren (2), wobei als Trainings-Eingangsdaten jeweils ein Frequenzspektrum (FS) und die dem Frequenzspektrum zugeordnete Temperatur (T) verwendet werden, und wobei als Trainings-Ausgangsdatum zumindest das Referenz-Frequenzspektrum (FS_ref) der Frequenzspektrum-Kurvenschar (13) verwendet wird, aus der das Frequenzspektrum (FS) als Trainings-Eingangsdatum stammt.

8. Verfahren (1) nach Anspruch 7, **dadurch gekennzeichnet, dass** die Frequenzspektren (FS) der Frequenzspektrum-Kurvenscharen (13) und die den Frequenzspektren (FS) der Frequenzspektrum-Kurvenscharen (13) zugeordneten Temperaturen (T) vor ihrer Verwendung als Trainingsdaten normalisiert werden, insbesondere durch Abbildung des Wertebereiches der Frequenzspektren (FS) und des Wertebereichs der den Frequenzspektren (FS) zugeordneten Temperaturen von Minimalwert zu Maximalwert auf einen definierten Normwertebereich.

9. Verfahren (1) nach einem der Ansprüche 1 bis 8, **dadurch gekennzeichnet, dass** in dem Vergleichsschritt (9) die Referenz-Frequenzspektrumabweichung (delta _FS) ermittelt wird durch Anwendung einer statistischen Ähnlichkeitsanalyse, insbesondere durch Berechnung eines Ähnlichkeitsma-ßes und/oder eines Distanzmaßes, oder durch Ermittlung einer Korrelation.

10. Verfahren (1) nach einem der Ansprüche 1 bis 9, **dadurch gekennzeichnet, dass** die Ermittlung des Betrieb-Frequenzspektrums (FS_op) des bei der Betriebstemperatur (T_op) erzeugten und erfassten Klingelsignals (S_ring) und/oder die Ermittlung des erwarteten Referenz-Frequenzspektrums (FS_ref,exp) und/oder der Vergleichsschritt (9) und/oder die Ermittlung (10) der Referenz-Frequenzspektrumabweichung (delta_FS) und/oder die Ermittlung (11) der Zustandsabweichung (delta _x) von der Steuer- und Auswerteeinheit (3) des Abstandssensors (2) durchgeführt wird oder auf einem externen Rechner außerhalb des Abstandssensors (2) erfolgt.

11. Verfahren (1) nach einem der Ansprüche 1 bis 10, **dadurch gekennzeichnet, dass** als Zustandsabweichung (delta_x) des Abstandssensors (2) ein Verschmutzungsgrad des Abstandssensors (2) ermittelt wird.

12. Abstandssensor (2), der auf Grundlage der Laufzeitbestimmung elektromagnetischer Wellen arbeitet, wobei bei einem Messvorgang von einer Steuer- und Auswerteeinheit (3) des Abstandssensors (2) ein Sendesignal (S_tx) erzeugt wird und das Sendesignal (S_tx) teilweise als Abstrahlsignal (S_emit) in einen Erfassungsraum (5) des Abstandssensors (2) emittiert wird, wobei das Sendesignal (S_tx) durch Wechselwirkung mit Komponenten des Abstandssensors (2) teilweise als parasitäres Klingelsignal (S_ring) zu der Steuer- und Auswerteeinheit (3) zurückkehrt und erfasst wird,
**dadurch gekennzeichnet,**
**dass** in dem Abstandssensor (2) ein Referenz-Frequenzspektrum (FS_ref) eines bei einer Referenztemperatur (T_ref) in einem Gutzustand des Abstandssensors (2) erzeugten und erfassten Klingelsignals (S_ring) abgelegt ist, dass im Betrieb in einem Istzustand des Abstandssensors (2) die Betriebstemperatur (T_op) des Abstandssensors (2) erfasst wird und ein Betrieb-Frequenzspektrum (FS_op) eines bei der Betriebstemperatur (T_op) erzeugten und erfassten Klingelsignals (S_ring) ermittelt wird,
**dass** aus der Betriebstemperatur (T_op) und aus dem bei der Betriebstemperatur (T_op) ermittelten Betrieb-Frequenzspektrum (FS_op) ein erwartetes Referenz-Frequenzspektrum (FS_ref,exp) ermittelt (8) wird und dass das in dem Abstandssensor (2) abgelegte Referenz-Frequenzspektrum (FS_ref) mit dem erwarteten Referenz-Frequenzspektrum (FS_ref,exp) in einem Vergleichsschritt (9) verglichen und eine Referenz-Frequenzspektrumabweichung (delta _FS) ermittelt wird und aus der Referenz-Frequenzspektrumabweichung (delta_FS) eine Zustandsabweichung (delta_x) des Abstandssensors ermittelt wird und die Zustandsabweichung (delta_x) zumindest mittelbar signalisiert (12) wird.

13. Abstandssensor (2) nach Anspruch 12, **dadurch gekennzeichnet, dass** die Steuer- und Auswerteeinheit (3) ein trainiertes künstliches neuronales Netzwerk (14) aufweist mit dem das erwartete Referenz-Frequenzspektrum (FS_ref,exp) ermittelt wird, wobei das künstliche neuronale Netzwerk (14) als Eingangsgrößen die Betriebstemperatur (T_op) des Abstandssensors (2) und das bei der Betriebstemperatur (T_op) des Abstandssensors (2) erfasste Betrieb-Frequenzspektrum (FS_op) erhält, und wobei das künstliche neuronale Netzwerk (14) als Ausgangsgröße zumindest das erwartete Referenz-Frequenzspektrum (FS_ref,exp) bei der Referenztemperatur (T_ref) liefert.

14. Abstandssensor (2) nach Anspruch 13, **dadurch gekennzeichnet, dass** das im Gutzustand aufgenommene Referenz-Frequenzspektrum (FS_ref) ebenfalls von dem trainierten künstlichen neuronalen Netzwerk (14) verarbeitet wird und das derart abgeleitete Referenz-Frequenzspektrum (FS_ref) als das abgelegte Referenz-Frequenzspektrum (FS_ ref) verwendet wird.

15. Abstandssensor (2) nach Anspruch 13 oder 14, **dadurch gekennzeichnet, dass** das künstliche neuronale Netzwerk (14) gewonnen worden ist gemäß den Verfahrensschritten nach einem der Ansprüche 7 oder 8.

16. Abstandssensor (2) nach einem der Ansprüche 12 bis 15, **dadurch gekennzeichnet, dass** die Steuer- und Auswerteeinheit (3) in dem Vergleichsschritt (9) die Referenz-Frequenzspektrumabweichung (delta_FS) ermittelt durch Anwendung einer statistischen Ähnlichkeitsanalyse, insbesondere durch Berechnung eines Ähnlichkeitsmaßes und/oder eines Distanzmaßes, oder durch Ermittlung einer Korrelation.

17. Abstandssensor (2) nach einem der Ansprüche 12 bis 16, **dadurch gekennzeichnet, dass** die Steuer- und Auswerteeinheit (3) als Zustandsabweichung (delta_x) des Abstandssensors (2) einen Verschmutzungsgrad des Abstandssensors (2) ermittelt.
